# EUROPEAN PATENT SPECIFICATION

(11) **EP 1 959 609 B1**
(45) Date of publication and mention of the grant of the patent: **13.10.2010**
(21) Application number: 07800679.8
(22) Date of filing: 06.07.2007
(51) Int. Cl.: H04L 12/24

(54) **A METHOD FOR SERVICE MANAGEMENT IN AN INTELLIGENT OPTICAL NETWORK**
VERFAHREN ZUR DIENSTEVERWALTUNG IN EINEM INTELLIGENTEN OPTISCHEN NETZWERK
PROCÉDÉ DE GESTION DE SERVICES DANS UN RÉSEAU OPTIQUE INTELLIGENT

(30) Priority: 28.09.2006 CN 200610159957
(43) Date of publication of application: 20.08.2008
(73) Proprietor: Huawei Technologies Co., Ltd., Shenzhen, Guangdong Province 518129 (CN)
(72) Inventor: XU, Huiying, Shenzhen Guangdong 518129 (CN); ZHANG, Fatai, Shenzhen Guangdong 518129 (CN)
(74) Representative: Casalonga, Axel
(86) International application number: PCT/CN2007/002081
(87) International publication number: WO 2008/037162

(56) References cited:
- WO-A2-01/78311
- CN-A- 1 501 647
- CN-A- 1 728 648
- CN-A- 1 794 649
- LOUIS BERGER (MOVAZ NETWORKS) IGOR BRYSKIN (MOVAZ NETWORKS) DIMITRI PAPADIMITRIOU (ALCATEL) ADRIAN FARREL (OLD DOG CONSULTING): "GMPLS Based Segment Recovery; draft-ietf-ccamp-gmpls-segment-recovery 02.txt" IETF STANDARD-WORKING-DRAFT, INTERNET ENGINEERING TASK FORCE, IETF, CH, vol. ccamp, no. 2, 1 May 2005 (2005-05-01), XP015041353 ISSN: 0000-0004
- CCAMP GMPLS P&R DESIGN TEAM J P LANG (EDITOR) Y REKHTER (EDITOR) D PAPADIMITRIOU (EDITOR): "RSVP-TE Extensions in support of End-to-End Generalized Multi-Protocol Label Switching (GMPLS)-based Recovery; draft-ietf-ccamp-gmpls-recove ry-e2e-signaling-03.txt" STANDARD-WORKING-DRAFT, INTERNET ENGINEERING TASK FORCE, IETF, CH, vol. ccamp, no. 3, 1 April 2005 (2005-04-01), XP015038129 ISSN: 0000-0004
- BERGER L ET AL: "Generalized Multi-Protocol Label Switching (GMPLS) Signaling; rfc3473.txt" IETF STANDARD, INTERNET ENGINEERING TASK FORCE, IETF, CH, 1 January 2003 (2003-01-01), XP015009256 ISSN: 0000-0003
- BERGER L ET AL: "Generalized Multi-Protocol Label Switching (GMPLS) Signaling Functional Description; rfc3471.txt" IETF STANDARD, INTERNET ENGINEERING TASK FORCE, IETF, CH, 1 January 2003 (2003-01-01), XP015009254 ISSN: 0000-0003

## Description

### Field of the Technology

The present invention relates to Automatic Switched Optical Network technologies, and more particularly, to a method for service management with Segment recovery function in Mesh networking.

### Background of the Invention

In a traditional optical network, such as a Synchronous Digital Hierarchy (SDH), a Synchronous Optical Network (SONET) or an Optical Transport Network (OTN), a networking mode of self-healing ring is mainly adopted, and the bandwidth utilization rate is not high. Moreover, in the traditional optical network, service scheduling is mainly configured statically by a network manager, and configurations are complex and time-consuming. The existing network architectures and networking modes can not accord with demands for multiple services, large bandwidth, high survival-ability, and providing fast connection etc, so that the network topology may evolve from the traditional one which mainly includes ring networking to the one which mainly includes Mesh networking, and the network connections may evolve from permanent connections designated statically to mainly signaling-based soft-permanent connections and signaling-based switched connections. The optical transport network of the new type is called an Automatically Switched Optical Network (ASON) by the International Telecommunication Union-Telecommunication Standardization Sector (ITU-T). In the ASON, a control plane is introduced, and the control plane is used for establishing, changing and maintaining network connections and recovering the connection when the network fails. One of modes for implementing the signaling of the ASON is to apply the Generalized Multi-Protocol Label Switching (GMPLS) protocol developed by the Internet Engineering Task Force (IETF).

Because the control plane is introduced in the ASON, the traffic affected by a network failure may be recovered dynamically through selecting another path, and by using the Mesh networking in the ASON, multiple failures may be recovered, so high reliability of services is provided. The recovery schemes adopted in the Mesh networking include Pre-computed a recovery Label Switch Path (LSP), Pre-signaled without resource pre-selection, Pre-signaled with resource pre-selection and Full LSP re-routing etc.

The recovery is divided into End-to-End recovery and Segment recovery by the IETF according to the scope of the recovery. In the End-to-End recovery, the whole LSP between a head node and a tail node may be protected. In the Segment recovery, a certain portion of a working LSP or certain portions of the working LSP may be protected according to a practical deployment policy, so the utilization rate of resources is improved, the efficiency of failure recovery is improved and the time of interruption in service due to a failure is reduced. The recovery schemes adopted in the End-to-End recovery may include: Pre-computed a recovery LSP, Pre-signaled without resource pre-selection, Pre-signaled with resource pre-selection and Full LSP re-routing etc, and the recovery schemes adopted in the Segment recovery generally include Pre-signaled without resource pre-selection and Pre-signaled with resource pre-selection.

By using the automatic protection switching schemes provided by the ASON, the network security is improved greatly, the possibility that an error occurs caused by manually switching is eliminated and the disadvantage that a switch can not be manually performed in time is also overcome. However, when necessary in some situations, some external commands are needed to manage service connections so as to provide effective auxiliary managements. For example, when a device is unstable and frequently changes between a normal state and a failure state, an operation of locking a working path or locking a recovery path is needed, so that services may not frequently switch between the working path and the recovery path, thus the quality of the services is ensured. As another example, when a service needs to be switched from a normal working path to a recovery path as demanded for managing resources, an external command of "requested switchover for normal traffic" is needed, so that an operator may trigger the switching operation through a network manager.

Therefore, a method for managing a service with a recovery function is needed, such as locking normal traffic, locking a recovery LSP and requested switching etc. At present, there only exist methods for service management with the End-to-End recovery function.

In the section 13 of E2E-RECOVERY, five external commands for service management with the End-to-End recovery function are described, which include: (1) Lockout of recovery LSP, (2) Lockout of normal traffic, (3) Forced switchover for normal traffic, (4) Requested switchover for normal traffic, (5) Requested switchover for recovery LSP. End-to-End services may be managed by these commands. By the command of "Lockout of recovery LSP", a ADMIN_STATUS object is carried in the Path message, the R bit and L bit of the ADMIN_STATUS object are set to 1, and when a Resv message with the L bit set to 1 is received, a recovery LSP is forced not to transport any traffic including normal traffic and extra traffic. By the command of "Forced switchover for normal traffic", a service is switched from a working LSP to a recovery LSP. By the command of "Requested switchover for recovery LSP", a return operation is performed, that is, a service is switched from a recovery LSP back to a working LSP.

In the Mesh networking, compared with the End-to-End recovery, the Segment recovery, according to deployment policies, may protect a service with fewer redundant resources and has a faster response speed of recovery switching. Therefore, the Segment recovery is paid great attention and is widely studied in the ASON. Similar to the service with the End-to-End recovery function, some external commands are needed to manage service connections of a service with the Segment recovery function in some situations. For example, when a device is unstable and frequently changes between a normal state and a failure state, an operation of locking a working path or locking a segment path is needed, so that services may not frequently switch between the working path and the segment path, and thus the quality of the services is ensured. As another example, when a service needs to switch from a normal segment working path to a certain segment path or switch from a segment path back to the segment working path as demanded for managing the resources, an external command of "requested switchover for a certain segment path " or "requested switchover for a certain segment working path" is needed, so that an operator may manage the service by sending the corresponding command through a network manager.

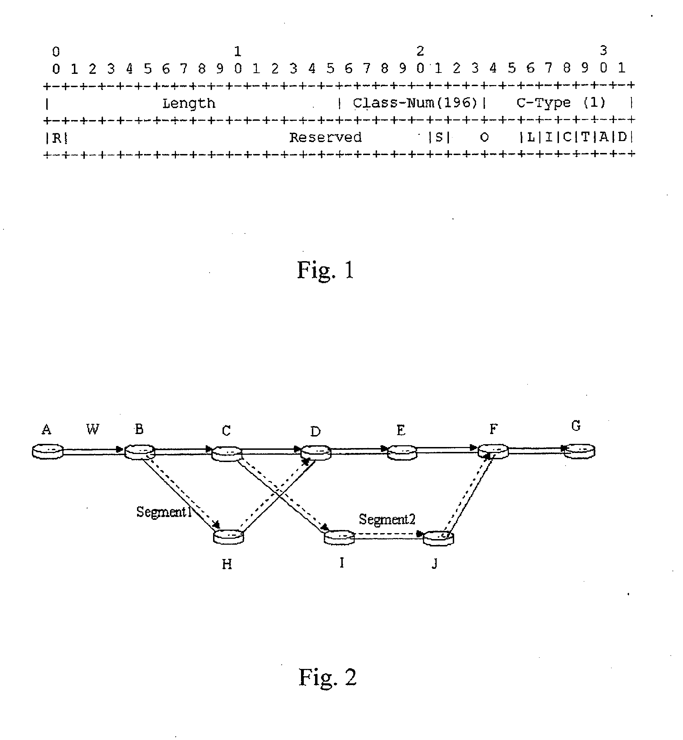

In the conventional technologies, only the service with the End-to-End recovery can be managed in a single signaling manner, but the service with the Segment recovery function can not be managed in a single signaling manner. As shown in Figure 2, a working path (A-B-C-D-E-F-G) has the Segment recovery, that is, the working path no longer has a whole End-to-End recovery path, but has two segment paths, i.e., Segment1 (B-H-D) protecting portion B-C-D of the working path and Segment2 (C-I-J-F) protecting portion C-D-E-F of the working path. Therefore, the service with the Segment recovery can not be managed in a single signaling manner the same way as the service with the End-to-End recovery.

LOUIS BERGER(MOVAZ NETWORKS) IGOR BRYSKIN(MOVAZ NETWORKS) DIMITRI PAPADIMITRIOU (ALCATEL) ADRIAN FARREL (OLD DOG CONSULTING):"GMPLS Based Segment Recovery; draft-ietf-ccamp-gmpls-segment-recovery 02.txt" IETF STANDARD=WORKING-DRAFT, INTERNET ENGINEERING TASK FORCE, IETF, CH, vol.ccamp, no.2, 1 May 2005(2005-05-01), XP 015041353 ISSN:0000-0004 describes protocol specific procedures for GMPLS RSVP-TE signaling extensions to support LSP segment protection and restoration. These extensions are intended to complement and be consistent with the extensions for End-to-End GMPLS-based Recovery. Implications and interactions with Fast Reroute are also addressed by this document. This document also updates the handling of Notify_Request objects.

CCAMP GMPLS P&R DESIGN TEAM J P LANG(EDITOR) Y REKHTER (EDITOR) D PAPADIMITRIOU(EDITOR):"RSVP-TE Extensions in support in End-to-End Generalized Multi-Protocol Label Switching (GMPLS)-based Recovery; draft-ietf-ccamp-gmpls-recovery-e2e-signaling-03.txt" STANDARD-WORKING-DRAFT, INTERNET ENGINEERING TASK FORCE, IETF, CH, vol.ccamp, no.3, 1 April 2005(2005-04-01), XP015038129 ISSN:0000-0004 describes protocol specific procedures and extensions for Generalized Multi-Protocol Label Switching Resource Reservation Protocol Traffic Engineering signaling to support end-to-end Label Switched Path recovery that is protection and restoration.

BERGER L ET AL: "Generalized Multi-protocol Label Switching (GMPLS) Signaling; rfc3473.txt" IETF STANDARD, INTERNET ENGINEERING TASK FORCE, IETF, CH, 1 January 2003 (2003-01-01), XP015009256 ISSN:0000-0003 describes extensions to MPLS RSVP-TE signaling required to support GMPLS. GMPLS extends the MPLS control plane to encompass time-division, wavelength and spatial switching.

BERGER L ET AL: "Generalized Multi-protocol Label Switching (GMPLS) Signaling Functional Description; rfc3471.txt" IETF STANDARD, INTERNET ENGINEERING TASK FORCE, IETF, CH, 1 January 2003 (2003-01-01), XP015009254 ISSN:0000-0003 describes extensions to MPLS signaling required to support GMPLS. and presents a functional description of the extensions.

### Summary of the Invention

The embodiments of the present invention provide a method for service management so as to manage a service with the Segment recovery function, and thus the shortages in the conventional technologies are overcome.

The following technical schemes are provided by the embodiments of the present invention.

As claimed, a method for service management in an intelligent optical network includes:
receiving, by a node on a working path, a management request message comprising an operation object and an operation type; the operation object comprises a working path, or comprises a working path and a segment path; the operation type is the type of an external command comprising lockout of working Label Switch Path, LSP, lockout of recovery LSP, forced switchover for normal traffic, requested switchover for normal traffic, forced switchover for recovery LSP, requested switchover for recovery LSP,
   freezing of current state and clearing;
determining whether the node on the working path is a branch node of a segment path; and managing a service on the segment path according to the operation type when the node on the working path is the branch node of the segment path;
wherein managing the service on the segment path according to the operation type comprises:
   creating a request message according to the operation type;
   transferring the request message along the segment path;
   returning, by a merge node of the segment path, an answer message in the opposite direction of the segment path;
   configuring, by each node on the segment path, state information in each node on the segment path according to the operation type.

Also claimed is a network node for service management in an intelligent optical network comprising: a first module, adapted to receive a management request message comprising an operation
object and an operation type; the operation object comprises a working path, or comprises a working path and a segment path; the operation type is the type of an external command comprising lockout of working Label Switch Path, LSP, lockout of recovery LSP, forced switchover for normal traffic, requested switchover for normal traffic, forced switchover for recovery LSP, requested switchover for recovery LSP, freezing of current state and clearing;
a second module, adapted to determine whether the network node is a branch node of a segment path; and a third module, adapted to manage a service on the segment path according to the operation type when the network node is the branch node of the segment path.
wherein managing the service on the segment path according to the operation type comprises:
creating a request message according to the operation type;
transferring the request message along the segment path;
returning, by a merge node of the segment path, an answer message in the opposite direction of the segment path;
configuring, by each node on the segment path, state information in each node on the segment path according to the operation type.

### Brief Description of the Drawings

Figure 1 is a schematic diagram illustrating a format of a ADMlN_STATUS object in accordance with an embodiment of the present invention;
Figure 2 is a schematic diagram illustrating a structure of a path with the Segment recovery in accordance with an embodiment of the present invention; and
Figure 3 is a flowchart illustrating a method for service management in accordance with an embodiment of the present invention.

### Detailed Description of the Invention

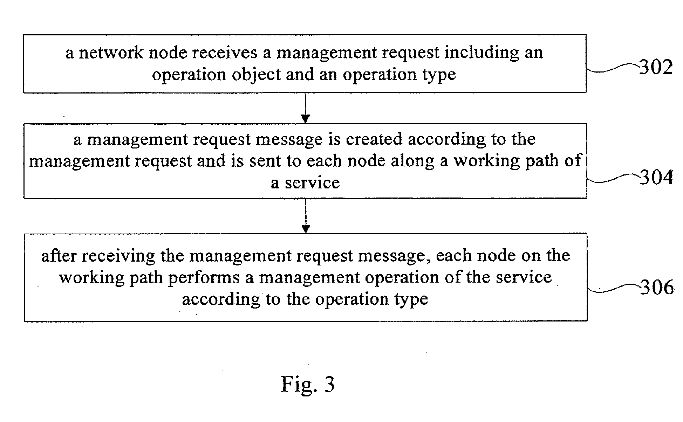

With reference to Figure 3, a method for service management in an intelligent optical network provided by the embodiments of the present invention includes the following processes. A network node receives a management request including an operation object and an operation type (block 302); a management request message is created according to the management request and is sent to each node along a working path of a service (block 304); after receiving the management request message, each node on the working path performs a management operation of the service according to the operation type.

The common external management commands for a service with the End-to-End recovery function include "lockout of recovery LSP", "lockout of working LSP", "forced switchover for normal traffic", "requested switchover for normal traffic", "forced switchover for recovery LSP", "requested switchover for recovery LSP", "freezing of current state" and "clearing". The corresponding external commands for a service with the Segment recovery function are also needed according to a Segment recovery policy.

The process of establishing Segment recovery is described in detail in "SEG-RECOVERY". Specifically, Secondary Record Route objects (SRROs) are recorded when the Segment recovery is established. It is unnecessary to extend the establishing process of "SEG-RECOVERY" for service management with the Segment recovery function in the embodiments of the present invention.

After Segment recovery is established according to the process described in "SEG-RECOVERY", the technical solution for managing the service with the Segment recovery function are as follows.
1. An operator manages a service at a head node of the service through the network manager or other operation terminals.
2. The operator selects an operation object and an operation type to be managed. The operation object may be a working path of a service to be managed or a segment path to be managed. The operation type may be the type of an external command, such as "lockout of working LSP", "lockout of recovery LSP", "forced switchover for normal traffic", "requested switchover for normal traffic", "forced switchover for recovery LSP", "requested switchover for recovery LSP", "freezing of current state" and "clearing". Only one of the above types may be selected as the operation type.
3. The operator sends a management command to the control plane of the head node through the network manager after selecting the operation object and the operation type.
4. The control plane creates a management request message carrying the working connection identifier of the service, the operation object, the operation type and other existing objects which are needed, and the management request message is sent downstream along the working path of the service.
4.1 If the type of the external command, i.e., the operation type, is the "lockout of working LSP", "freezing of current state", or "clearing", it is unnecessary to select any segment path, that is, it is unnecessary to carry the information of a Segment recovery LSP.
4.2 If the type of the external command, i.e., the operation type, is the "lockout of recovery LSP", it is necessary to select the segment path to be locked out, that is, it is necessary to carry the identifier of the segment path (i.e. the recovery LSP) to be locked out in the management request message.
4.3 If the type of the external command, i.e., the operation type, is the "forced switchover for normal traffic", "requested switchover for normal traffic", "forced switchover for recovery LSP", or "requested switchover for recovery LSP", it is necessary to select the segment path to be switched, that is, it is necessary to carry the identifier of the segment path (i.e. the recovery LSP) to be switched in the management request message.
5. Each node on the working path (including the head node) performs the process corresponding to the operation type after receiving the management request message.
5.1 If the operation type is "lockout of working LSP", the management request message is transferred from the head node to the tail node along the working LSP, and an answer message is returned from the tail node to the head node in the opposite direction and the state information is configured in each node indicating that the working path is locked out, i.e., indicating that the service can not be switched from the working path to any Segment recovery path.
5.2 If the operation type is "freezing of current state" or "clearing", each of the nodes on the working path determines whether there is a recovery association relation between the segment path and the working path (the recovery association relation is established when the segment path is established). If there is not a recovery association relation between the segment path and the working path, the management request message is transferred downwards, if there is a recovery association relation between the segment path and the working path, it shows that the node is the branch node of a certain segment path, and the node creates a new request message according to the operation type. The new request message is transferred downwards along the segment path. And thus, multiple request messages, i.e., the management request message on the working path and the new request message, are transferred respectively along the working path and the segment path.
5.2.1 If the operation type is "freezing of current state", after the request message is transferred to the merge node of the segment path along the segment path, an answer message is returned in the opposite direction along the segment path and the state information is configured in each node indicating that the segment path is frozen, i.e., indicating that a service can not be switched to the segment path and the service can not be switched from the segment path back to the working path either. After the request message on the working path is transferred to the merge node, an answer message is also returned in the opposite direction and the state information is configured in each node on the working path indicating that the working path is frozen, i.e., indicating that a service can not be switched to any segment path and the service can not be switched from any segment path back to the working path either.
5.2.2 If the operation type is "clearing", similar to the operation described in 5.2.1, the request message is transferred along the segment path or the working path to clear all the switching states or lockout states.
5.3 If the operation type is others, each of the nodes in the working path determines whether the node is the branch node of a segment path according to the identifiers of the segment paths carried in the management request message. If the node is not the branch node of a segment path, the management request message is transferred downwards; if the node is the branch node of a segment path, the node creates a new request message according to the operation type. The new request message is transferred downwards along the segment path. And thus, multiple request messages, i.e., the management request message on the working path and the new request message, are transferred respectively along the working path and the segment path.
5.3.1 If the operation type is "lockout of recovery LSP", after the request message in the segment path is transferred to the merge node, an answer message is returned in the opposite direction along the segment path, and the state information is configured in each node on the segment path indicating that the segment path is locked out, i.e., indicating that the segment path can not transfer traffic (including normal traffic and extra traffic). After the request message in the working path is transferred to the merge node, an answer message is returned in the opposite direction but no state information is configured in the nodes on the working path.
5.3.2 If the operation type is "forced switchover for normal traffic", "requested switchover for normal traffic", "force switchover for recovery LSP" or "requested switchover for recovery LSP", the nodes in each segment path and the nodes in the working path perform switch operation and return operation according to the processes described in "E2E-RECOVERY" (draft-ietf-ccamp-gmpls-recovery-e2e-signaling-03.txt) and "SEG-RECOVERY" (draft-ietf-ccamp-gmpls-segment -recovery-02.txt).

The above processes may be implemented according to the GMPLS Resource Reservation Protocol-Traffic Engineering (RSVP-TE) or the Constraint-Based Label Distribution Protocol (CR-LDP). There is no substantial difference between the two protocols, and the detailed procedure of protocol implementation is described below by taking the RSVP-TE as an example.

The ADMIN_STATUS object is extended. Specifically, an S bit and O bit are added (obviously, the function may also be implemented by extending a new object). As shown in Figure 1, the format includes:
S (Segment): one bit, indicating whether a service with the Segment recovery function needs to be managed. Specifically, when the S bit is set to 1, indicating that a service with the Segment recovery function needs to be managed and the O bit is valid; O (Operation): 4 bits, indicating the operation type. The defined operation types include:
0: lockout of working LSP;
   1: lockout of recovery LSP;
   2: forced switchover for normal traffic;
   3: requested switchover for normal traffic;
   4: forced switchover for recovery LSP;
   5: requested switchover for recovery LSP;
   6: freezing of current state;
   7: clearing;
   8-15: reserved.

Refer to "E2E-RECOVERY" for the meanings of other identifying bits.

Referring to Figure 2, the detailed implementation process of managing a service with the Segment recovery function is described as follows.
1. As shown in Figure 2, the working path W is A-B-C-D-E-F-G, and has two segment paths: Segment1 which is B-H-D and Segment2 which is C-I-J-F (the paths may be bi-directional).
2. The head node A and the tail node G have the Secondary Record Route objects (SRROs) information of the two segment paths. Other intermediate nodes may also have the SRROs information of some segment paths. For example, the node E has the SRRO information of Segment1. The process of recording SRRO information may be implemented according to "SEG-RECOVERY".
3. An operator selects the working connection of a service to be managed, i.e., W, through a network manager and selects the operation type of the management to be performed. When the selected operation type is "lockout of working LSP", "freezing of current state", or "clearing", it is unnecessary for the operator to select a segment path. When other operation is to be performed, the operator needs to select a segment path to be managed, such as the segment path to be locked out or the segment path to which normal traffic is to be switched.
4. The operator sends a management command to the control plane through the network manager after selecting the operation object and the operation type.
5. The control plane creates a management request message, i.e., a Path message packet, according to the selection of the operator. The management request message carries informations of W for identifying the working path, such as (Session, Sender_Template) and the management request message carries an extended Admin_Status object in which the R bit and S bit are set to 1 and the O bit is set to the value of an operation type and the management request message also carries segment information, i.e., an SRRO object, and other standards objects according to the operation type and the requirements of management.
5.1 If the operation type is "lockout of working LSP", the Path message is transferred from the head node A to the tail node G along the working path, and an Resv message is returned from the merge node in the opposite direction, and each node configures, according to the S bit and the O bit in the Admin_Status object, state information indicating that the working path is locked out, i.e., indicating that the service can not be switched from the working path to any Segment recovery path.
5.2 If the operation type is "freezing of current state" or "clearing", each node in the working path dynamically recognizes whether the node itself is the branch node of a certain segment path. When the Path message is transferred to a node in the working path, the node determines whether the node has an Association object indicating a recovery segment path relation with the working path W (the association relation is represented by an Association object when a segment path is established). If the node does not have an Association object, the Path message is continuously transferred downwards; if the node has an Association object, it shows that the node is the branch node of a segment path (such as node B or C), and a new Path message is created by node B or C, and in the new Path message, the information of Segment1 or Segment2, such as (Session, Sender_Template) and the like is encapsulated for identifying the conversation of the segment path, and the Admin_Status object and the other standards objects in the Path message on the working path are duplicated. And multiple Path messages are transferred respectively along the working path and the segment paths. After each of the multiple Path messages is transferred to the merge node of the segment path or the merge node of the working path, a Resv message is returned in the opposite direction and the state information indicating that the working path or the segment path are frozen is configured in each node; or all the switch or lockout states are cleared.
5.3 If the operation type is "lockout of recovery LSP", supposing that Segment2 is to be locked out, the Path message transferred along the working path carries the SRRO information of Segment2 to be locked out. After receiving the Path message, each node determines whether the node itself is the first object of the SRRO of Segment2, i.e., determines whether the node itself is node C. If the node itself is not node C, the Path message is continuously transferred downstream; if the node is the branch node of the segment path, Segment2, (i.e. node C) and the information of Segment2 such as (Session, Sender_template) is acquired by searching the Association object, a new Path message is created according to the information of Segment2 and the Admin_Status object, and the other standards objects in the Path message on the working path are duplicated. And the Path message is transferred downstream along the path (C-I-J-F) of Segment2. After the Path message is transferred to the merge node F, a Resv message is returned upstream, and each node configures the state information indicating that Segment2 is locked out, i.e., indicating that Segment2 can not be used to transfer traffic (including normal traffic and extra traffic). The Path message along the working path is transferred downstream to the merge node of the working path G. And a Resv message is returned upstream but no operation is performed.
5.4 If the operation type is "forced switchover for normal traffic", "requested switchover for normal traffic", "forced switchover for recovery LSP", or "requested switchover for recovery LSP", each node determines whether the node is the branch node of a certain segment path according to the solution described in 5.3, and each node creates a corresponding Path message, and performs the operation of switch and return according to the operation type. As an example, the operation of "requested switchover for normal traffic" for Segment2 is described as follows (the operations of other switchovers are similar). The node C is determined as the branch node of Segment2 according to the solution described in 5.3, and a new Path message is created by node C, and Segment2 is activated (i.e. creating the cross connection between the control plane and the transfer plane). Afterward, the service connection between the working path C-D-E-F is switched to Segment2 (i.e. C-I-J-F). The detailed operation of switch and return may be performed according to the process described in "E2E-RECOVERY" and "SEG-RECOVERY".

The present invention provides a method for service management with the Segment recovery function, so that the external recovery and recovery operation of a whole connection working path or a certain segment path may be implemented. Therefore, the manageability of a service for an operator is improved.

It is to be noted that the method of the present invention is applicable not only to a single domain network but also to a multiple domains inter-working network. The above embodiments are only for describing the present invention and are not for use in limiting the protection scope of the present invention. Any modification, equivalent replacement or improvement made under the principles of the present invention shall be included in the protection scope of the present invention.

## Claims

1. A method for service management in an intelligent optical network, comprising:
receiving, by a node on a working path, a management request message comprising an operation object and an operation type; the operation object comprising a working path, or a working path and a segment path; the operation type being of the type of an external command comprising lockout of working Label Switch Path, LSP, lockout of recovery LSP, forced switchover for normal traffic, requested switchover for normal traffic, forced switchover for recovery LSP, requested switchover for recovery LSP, freezing of current state and clearing;determining whether the node on the working path is a branch node of a segment path; and
managing a service on the segment path according to the operation type when the node on the working path is the branch node of the segment path;
wherein managing the service on the segment path according to the operation type comprises:
creating a request message according to the operation type;
transferring the request message along the segment path;
returning, by a merge node of the segment path, an answer message in the opposite direction of the segment path;
configuring, by each node on the segment path, state information in each node on the segment path according to the operation type.

2. The method of Claim 1, wherein
the identity of the working path is solely carried in the operation object when the operation type is lockout of working Label Switch Path, LSP, freezing of current state or clearing;
the identity of a segment path to be locked out is carried in the operation object when the operation type is lockout of recovery LSP; and
the identity of a segment path to be switched is carried in the operation object when the operation type is forced switchover for normal traffic, requested switchover for normal traffic, forced switchover for recovery LSP, or requested switchover for recovery LSP.

3. The method of Claim 2, wherein whether the node on the working path is the branch node of the segment path is determined according to a preconfigured relationship between working paths and segment paths or according to the carried identity of the segment path.

4. The method of Claim 1, wherein configuring the state information in each node on the segment path according to the operation type comprises:
configuring the state information in each node on the segment path as frozen when the operation type is freezing of current state;
clearing the state information in each node on the segment path when the operation type is clearing; and
configuring the state information in each node on the segment path as locked out when the operation type is lockout of recovery LSP.

5. The method of Claim 1, further comprising: transferring the management request message along the working path when the node on the working path is not the branch node of the segment path.

6. The method of Claim 5, further comprising:
returning, by a merge node of the working path, an answer message in the opposite direction of the working path; and
configuring, by each node on the working path, state information in each node on the working path according to the operation type.

7. The method of Claim 6, wherein
the state information in each node on the working path is configured as locked out when the operation type is the lockout of working LSP;
the state information in each node on the working path is configured as frozen when the operation type is freezing of current state;
the state information in each node on the working path is cleared when the operation type is the clearing; and
the state information in each node on the working path is unchanged when the operation type is the lockout of recovery LSP.

8. A network node for service management in an intelligent optical network, comprising:
a first module, adapted to receive a management request message comprising an operation object and an operation type; the operation object comprising a working path, or a working path and a segment path; the operation type being of the type of an external command comprising lockout of working Label Switch Path, LSP, lockout of recovery LSP, forced switchover for normal traffic, requested switchover for normal traffic, forced switchover for recovery LSP, requested switchover for recovery LSP, freezing of current state and clearing;
a second module, adapted to determine whether the network node is a branch node of a segment path; and
a third module, adapted to manage a service on the segment path according to the operation type when the network node is the branch node of the segment path;
wherein managing the service on the segment path according to the operation type comprises:
creating a request message according to the operation type;
transferring the request message along the segment path;
returning, by a merge node of the segment path, an answer message in the opposite direction of the segment path;
configuring, by each node on the segment path, state information in each node on the segment path according to the operation type.

9. The network node of Claim 8, wherein the third module comprises:
a first submodule, adapted to create a request message according to the operation type; and
a second submodule, adapted to transfer the request message along the segment path.

10. The network node of Claim 8, further comprising: a fourth module, adapted to return an answer message in the opposite direction of the segment path when the network node is a merge node of the segment path.

11. The network node of Claim 8, further comprising: a fifth module, adapted to configure state information in the network node according to the operation type.

12. The network node of Claim 8, further comprising: a sixth module, adapted to transfer the management request message along the working path when the node on the working path is not a branch node of the segment path.

## Patentansprüche

1. Verfahren zur Diensteverwaltung in einem intelligenten optischen Netzwerk, umfassend:
Empfangen, über einen Knoten auf einem Arbeitsweg, einer Verwaltungsanforderungsnachricht, umfassend ein Operationsobjekt und einen Operationstyp; wobei das Operationsobjekt einen Arbeitsweg oder einen Arbeitsweg und einen Segmentweg umfasst; wobei der Operationstyp von dem Typ eines externen Befehls ist, umfassend eine Sperre eines Arbeits-LSP (Label Switch Path),
eine Sperre eines Wiederherstellungs-LSP, eine erzwungene Umschaltung für normalen Verkehr, eine angeforderte Umschaltung für normalen Verkehr, eine erzwungene Umschaltung für Wiederherstellungs-LSP, eine angeforderte Umschaltung für Wiederherstellungs-LSP, Einfrieren eines aktuellen Zustands und
Löschen; Bestimmen, ob der Knoten auf dem Arbeitsweg ein Zweigknoten eines Segmentwegs ist; und
Verwalten eines Dienstes auf dem Segmentweg gemäß dem Operationstyp, wenn der Knoten auf dem Arbeitsweg der Zweigknoten des Segmentwegs ist;
wobei das Verwalten des Dienstes auf dem Segmentweg gemäß dem Operationstyp Folgendes umfasst:
Erstellen einer Anforderungsnachricht gemäß dem Operationstyp;
Transferieren der Anforderungsnachricht entlang dem Segmentweg;
Zurückschicken, über einen Vereinigungsknoten des Segmentwegs, einer Antwortnachricht in der entgegengesetzten Richtung des Segmentwegs;
Konfigurieren, durch jeden Knoten auf dem Segmentweg, von Zustandsinformationen in jedem Knoten auf dem Segmentweg gemäß dem Operationstyp.

2. Verfahren nach Anspruch 1, wobei
die Identität des Arbeitswegs ausschließlich in dem Operationsobjekt geführt wird, wenn der Operationstyp eine Sperre des Arbeits-LSP, das Einfrieren des gegenwärtigen Zustands oder Löschen ist;
die Identität eines zu sperrenden Segmentwegs in dem Operationsobjekt geführt wird, wenn der Operationstyp eine Sperre des Wiederherstellungs-LSP ist; und
die Identität eines zu schaltenden Segmentwegs in dem Operationsobjekt geführt wird, wenn der Operationstyp eine erzwungene Umschaltung für normalen Verkehr, eine angeforderte Umschaltung für normalen Verkehr, eine erzwungene Umschaltung für Wiederherstellungs-LSP oder eine angeforderte Umschaltung für Wiederherstellungs-LSP ist.

3. Verfahren nach Anspruch 2, wobei, ob der Knoten auf dem Arbeitsweg der Zweigknoten des Segmentwegs ist, gemäß einer vorkonfigurierten Beziehung zwischen Arbeitswegen und Segmentwegen oder gemäß der geführten Identität des Segmentwegs bestimmt wird.

4. Verfahren nach Anspruch 1, wobei das Konfigurieren der Zustandsinformationen in jedem Knoten auf dem Segmentweg gemäß dem Operationstyp Folgendes umfasst:
Konfigurieren der Zustandsinformationen in jedem Knoten auf dem Segmentweg als eingefroren, wenn der Operationstyp das Einfrieren eines aktuellen Zustands ist;
Löschen der Zustandsinformationen in jedem Knoten auf dem Segmentweg, wenn der Operationstyp das Löschen ist; und
Konfigurieren der Zustandsinformationen in jedem Knoten auf dem Segmentweg als gesperrt, wenn der Operationstyp eine Sperre eines Wiederherstellungs-LSP ist.

5. Verfahren nach Anspruch 1, weiterhin umfassend: Transferieren der Verwaltungsanforderungsnachricht entlang dem Arbeitsweg, wenn der Knoten auf dem Arbeitsweg nicht der Zweigknoten des Segmentwegs ist.

6. Verfahren nach Anspruch 5, weiterhin umfassend:
Zurückschicken, durch einen Vereinigungsknoten des Arbeitswegs, einer Antwortnachricht in der entgegengesetzten Richtung des Arbeitswegs; und
Konfigurieren, durch jeden Knoten auf dem Arbeitsweg, von Zustandsinformationen in jedem Knoten auf dem Arbeitsweg gemäß dem Operationstyp.

7. Verfahren nach Anspruch 6, wobei
die Zustandsinformationen in jedem Knoten auf dem Arbeitsweg als gesperrt konfiguriert sind, wenn der Operationstyp die Sperre eines Arbeits-LSP ist;
die Zustandsinformationen in jedem Knoten auf dem Arbeitsweg als eingefroren konfiguriert sind, wenn der Operationstyp das Einfrieren eines aktuellen Zustands ist; die Zustandsinformationen in jedem Knoten auf dem Arbeitsweg gelöscht werden, wenn der Operationstyp das Löschen ist; und
die Zustandsinformationen in jedem Knoten auf dem Arbeitsweg unverändert sind, wenn der Operationstyp die Sperre eines Wiederherstellungs-LSP ist.

8. Netzwerkknoten für Diensteverwaltung in einem intelligenten optischen Netzwerk, umfassend:
ein erstes Modul, das ausgelegt ist zum Empfangen einer Verwaltungsanforderungsnachricht, umfassend ein Operationsobjekt und einen Operationstyp; wobei das Operationsobjekt einen Arbeitsweg oder einen Arbeitsweg und einen Segmentweg umfasst; wobei der Operationstyp von dem Typ eines externen Befehls ist, umfassend eine Sperre eines Arbeits-LSP, eine Sperre eines Wiederherstellungs-LSP, eine erzwungene Umschaltung für normalen Verkehr, eine angeforderte Umschaltung für normalen Verkehr, eine erzwungene Umschaltung für Wiederherstellungs-LSP, eine angeforderte Umschaltung für Wiederherstellungs-LSP, Einfrieren eines aktuellen Zustands und Löschen;
ein zweites Modul, das ausgelegt ist zum Bestimmen, ob der Netzwerkknoten ein Zweigknoten eines Segmentwegs ist; und
ein drittes Modul, das ausgelegt ist zum Verwalten eines Dienstes auf dem Segmentweg gemäß dem Operationstyp, wenn der Netzwerkknoten der Zweigknoten des Segmentwegs ist;
wobei das Verwalten des Dienstes auf dem Segmentweg gemäß dem Operationstyp Folgendes umfasst:
Erstellen einer Anforderungsnachricht gemäß dem Operationstyp;
Transferieren der Anforderungsnachricht entlang dem Segmentweg;
Zurückschicken, über einen Vereinigungsknoten des Segmentwegs, einer Antwortnachricht in der entgegengesetzten Richtung des Segmentwegs;
Konfigurieren, durch jeden Knoten auf dem Segmentweg, von Zustandsinformationen in jedem Knoten auf dem Segmentweg gemäß dem Operationstyp.

9. Netzwerkknoten nach Anspruch 8, wobei das dritte Modul Folgendes umfasst:
ein erstes Teilmodul, das ausgelegt ist zum Erstellen einer Anforderungsnachricht gemäß dem Operationstyp; und
ein zweites Teilmodul, das ausgelegt ist zum Transferieren der Anforderungsnachricht entlang dem Segmentweg.

10. Netzwerkknoten nach Anspruch 8, weiterhin umfassend: ein viertes Modul, das ausgelegt ist zum Zurückschicken einer Antwortnachricht in der entgegengesetzten Richtung des Segmentwegs, wenn der Netzwerkknoten ein Vereinigungsknoten des Segmentwegs ist.

11. Netzwerkknoten nach Anspruch 8, weiterhin umfassend: ein fünftes Modul, das ausgelegt ist zum Konfigurieren von Zustandsinformationen in dem Netzwerkknoten gemäß dem Operationstyp.

12. Netzwerkknoten nach Anspruch 8, weiterhin umfassend: ein sechstes Modul, das ausgelegt ist zum Transferieren der Verwaltungsanforderungsnachricht entlang dem Arbeitsweg, wenn der Knoten auf dem Arbeitsweg nicht ein Zweigknoten des Segmentwegs ist.

## Revendications

1. Procédé de gestion de services dans un réseau optique intelligent, comprenant :
la réception, par un noeud sur un chemin de travail, d'un message de requête de gestion comprenant un objet d'opération et un type d'opération ; l'objet d'opération comprenant un chemin de travail, ou un chemin de travail et un chemin de segment ;
le type d'opération étant du type d'une commande externe qui comprend un verrouillage de Chemin de Commutation d'Etiquettes, LSP, de travail, un verrouillage de LSP de récupération, une commutation forcée du trafic normal, une commutation demandée du trafic normal, une commutation forcée de LSP de récupération, une commutation demandée de LSP de récupération, un figeage de l'état actuel et une libération ; le fait de déterminer si le noeud sur le chemin de travail est ou non un noeud de branchement d'un chemin de segment ; et
la gestion d'un service sur le chemin de segment en fonction du type d'opération quand le noeud sur le chemin de travail est le noeud de branchement du chemin de segment ;
dans lequel la gestion du service sur le chemin de segment en fonction du type d'opération comprend :
la création d'un message de requête en fonction du type d'opération ;
le transfert du message de requête le long du chemin de segment ;
le renvoi, par un noeud de fusion du chemin de segment, d'un message de réponse dans le sens opposé du chemin de segment ;
la configuration, par chaque noeud sur le chemin de segment, d'informations d'état dans chaque noeud sur le chemin de segment en fonction du type d'opération.

2. Procédé selon la revendication 1, dans lequel
l'identité du chemin de travail est portée uniquement dans l'objet d'opération quand le type d'opération est un verrouillage du Chemin de Commutation d'Etiquettes, LSP, de travail, un figeage de l'état actuel ou une libération ;
l'identité d'un chemin de segment à verrouiller est portée dans l'objet d'opération quand le type d'opération est un verrouillage de LSP de récupération ; et
l'identité d'un chemin de segment à commuter est portée dans l'objet d'opération quand le type d'opération est une commutation forcée du trafic normal, une commutation demandée du trafic normal, une commutation forcée de LSP de récupération, ou une commutation demandée de LSP de récupération.

3. Procédé selon la revendication 2, dans lequel la détermination que le noeud sur le chemin de travail est le noeud de branchement du chemin de segment est faite en fonction d'une relation préconfigurée entre des chemins de travail et des chemins de segment ou en fonction de l'identité portée du chemin de segment.

4. Procédé selon la revendication 1, dans lequel la configuration des informations d'état dans chaque noeud sur le chemin de segment en fonction du type d'opération comprend :
la configuration des informations d'état dans chaque noeud sur le chemin de segment comme figées quand le type d'opération est un figeage de l'état actuel ;
la libération des informations d'état dans chaque noeud sur le chemin de segment quand le type d'opération est une libération ; et
la configuration des informations d'état dans chaque noeud sur le chemin de segment comme verrouillées quand le type d'opération est un verrouillage de LSP de récupération.

5. Procédé selon la revendication 1, comprenant en outre le transfert du message de requête de gestion le long du chemin de travail quand le noeud sur le chemin de travail n'est pas le noeud de branchement du chemin de segment.

6. Procédé selon la revendication 5, comprenant en outre :
le renvoi, par un noeud de fusion du chemin de travail, d'un message de réponse dans le sens opposé du chemin de travail ; et
la configuration, par chaque noeud sur le chemin de travail, d'informations d'état dans chaque noeud sur le chemin de travail en fonction du type d'opération.

7. Procédé selon la revendication 6, dans lequel
les informations d'état dans chaque noeud sur le chemin de travail sont configurées comme verrouillées quand le type d'opération est le verrouillage de LSP de travail ; les informations d'état dans chaque noeud sur le chemin de travail sont configurées comme figées quand le type d'opération est le figeage de l'état actuel ;
les informations d'état dans chaque noeud sur le chemin de travail sont libérées quand le type d'opération est la libération ; et
les informations d'état dans chaque noeud sur le chemin de travail sont inchangées quand le type d'opération est le verrouillage de LSP de récupération.

8. Noeud de réseau de gestion de service dans un réseau optique intelligent, comprenant :
un premier module, adapté pour recevoir un message de requête de gestion comprenant un objet d'opération et un type d'opération ; l'objet d'opération comprenant un chemin de travail, ou un chemin de travail et un chemin de segment ;
le type d'opération étant du type d'une commande externe qui comprend un verrouillage de Chemin de Commutation d'Etiquettes, LSP, de travail, un verrouillage de LSP de récupération, une commutation forcée du trafic normal, une commutation demandée du trafic normal, une commutation forcée de LSP de récupération, une commutation demandée de LSP de récupération, un figeage de l'état actuel et une libération ;
un deuxième module, adapté pour déterminer si le noeud de réseau est ou non un noeud de branchement d'un chemin de segment ; et
un troisième module, adapté pour gérer un service sur le chemin de segment en fonction du type d'opération quand le noeud de réseau est le noeud de branchement du chemin de segment ;
dans lequel la gestion du service sur le chemin de segment en fonction du type d'opération comprend :
la création d'un message de requête en fonction du type d'opération ;
le transfert du message de requête le long du chemin de segment ;
le renvoi, par un noeud de fusion du chemin de segment, d'un message de réponse dans le sens opposé du chemin de segment ;
la configuration, par chaque noeud sur le chemin de segment, d'informations d'état dans chaque noeud sur le chemin de segment en fonction du type d'opération.

9. Noeud de réseau selon la revendication 8, dans lequel le troisième module comprend :
un premier sous-module, adapté pour créer un message de requête en fonction du type d'opération ; et
un deuxième sous-module, adapté pour transférer le message de requête le long du chemin de segment.

10. Noeud de réseau selon la revendication 8, comprenant en outre un quatrième module, adapté pour renvoyer un message de réponse dans le sens opposé du chemin de segment quand le noeud de réseau est un noeud de fusion du chemin de segment.

11. Noeud de réseau selon la revendication 8, comprenant en outre un cinquième module, adapté pour configurer des informations d'état dans le noeud de réseau en fonction du type d'opération.

12. Noeud de réseau selon la revendication 8, comprenant en outre un sixième module, adapté pour transférer le message de requête de gestion le long du chemin de travail quand le noeud sur le chemin de travail n'est pas un noeud de branchement du chemin de segment.
